# EUROPÄISCHE PATENTANMELDUNG

(11) **EP 1 092 601 A2**
(43) Veröffentlichungstag der Anmeldung: **18.04.2001**
(21) Anmeldenummer: 00121340.4
(22) Anmeldetag: 10.10.2000
(51) Int. Cl.: B60R 21/22

(54) **Aufblasbares Schutzkissen für den Insassenschutz in Fahrzeugen**

(30) Priorität: 15.10.1999 DE 29918198 U
(71) Anmelder: TRW Occupant Restraint Systems GmbH & Co. KG, 73553 Alfdorf (DE)
(72) Erfinder: Agostini, Christian, 73577 Ruppertshofen (DE)
(74) Vertreter: Degwert, Hartmut, Dipl.-Phys.

(57) **Zusammenfassung**

Das aufblasbare Schutzkissen (10) für den Insassenschutz in Fahrzeugen, insbesondere zur Abdeckung der seitlichen oberen Begrenzungsstrukturen des Fahrzeugs zwischen A-Säule und C-Säule, besteht aus zwei aufeinandergelegten Lagen eines Textilmaterials. Die zwei Lagen Textilmaterial sind aus einem einteiligen, entlang einer Faltlinie gefalteten Zuschnitt gebildet. Eine der aufeinandergelegten Lagen des Textilmaterials weist an den nicht aufblasbaren Flächenbereichen (14, 16, 18) entsprechende Aussparungen auf.

## Beschreibung

Die Erfindung betrifft ein aufblasbares Schutzkissen für den Insassenschutz in Fahrzeugen.

Aufblasbare Schutzkissen zur Abdeckung der seitlichen oberen Begrenzungsstrukturen des Fahrzeugs zwischen A-Säule und C-Säule werden mit mehreren voneinander abgegrenzten Kammerbereichen ausgebildet, die im Aktivierungsfall Teile der Fahrzeugstruktur abdecken, von denen eine besondere Gefährdung ausgehen kann. Zwischen den Kammerbereichen befinden sich nicht aufblasbare Flächenbereiche. Ein solches Schutzkissen wird gewöhnlich aus zwei übereinandergelegten Lagen eines Textilmaterials gefertigt. Die aufeinanderliegenden Lagen des Textilmaterials werden entlang dem Umfangsrand und am Umfang der aufblasbaren Kammerbereiche miteinander verbunden, insbesondere durch Nähte.

Das Schutzkissen wird im gefalteten Zustand hinter einer Dachkante im Fahrzeug verstaut. Der dafür benötigte Stauraum ist erheblich.

Durch die Erfindung wird das auf blasbare Schutzkissen dahingehend weitergebildet, daß ohne jegliche Beeinträchtigung der Funktion der Stauraum zur Unterbringung des gefalteten Schutzkissens vermindert wird.

Gemäß der Erfindung sind bei dem aufblasbaren Schutzkissen die nicht aufblasbaren Flächenbereiche aus nur einer Lage des Textilmaterials ausgebildet. Die praktische Realisierung erfolgt dadurch, daß eine der aufeinandergelegten Lagen des einteiligen Textilzuschnitts an den nicht autblasbaren Flächenbereichen entsprechende Aussparungen aufweist. Durch die Materialeinsparung an den aufblasbaren Flächenbereichen wird das Volumen des gefalteten Schutzkissens erheblich vermindert. Entsprechend kleiner kann der Stauraum unter der Dachkante des Fahrzeugs ausgelegt werden.

Weitere Vorteile und Merkmale der Erfindung ergeben sich aus der folgenden Beschreibung und aus der Zeichnung, auf die Bezug genommen wird.

Die Zeichnungen zeigen:
Fig. 1 ein Schutzkissen im entfalteten Zustand;
Fig. 2 einen Textilmaterialzuschnitt zur Herstellung des Gassacks in Draufsicht; und
Fig. 3 eine Schnittansicht des aufgeblasenen Schutzkissens.

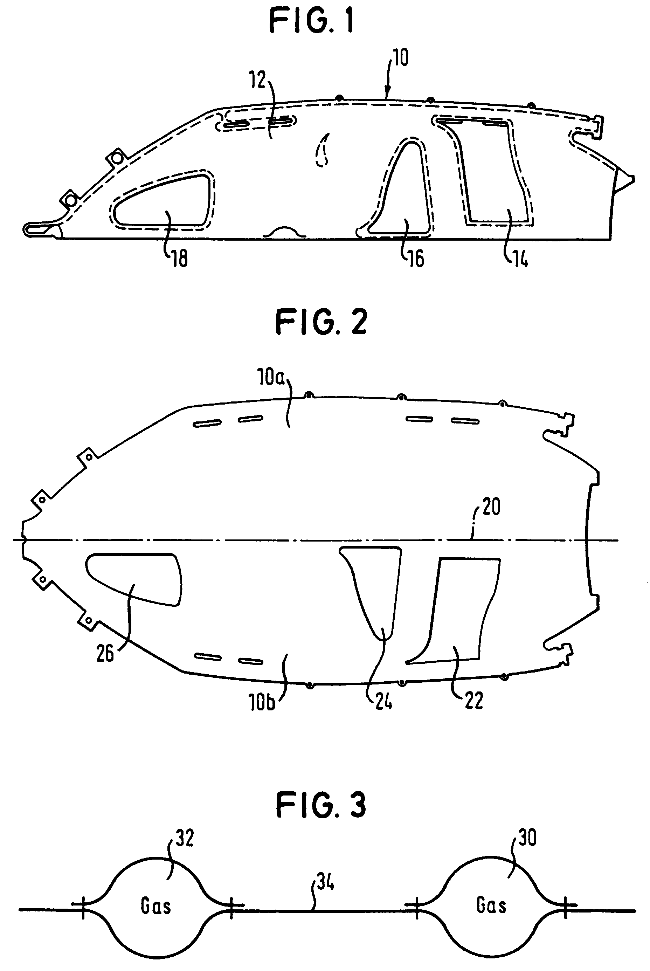

Das in Fig. 1 gezeigte aufblasbare Schutzkissen 10 ist ein vorhangähnliches Gebilde, das sich im aktivierten Zustand über die seitliche obere Begrenzungsstruktur eines Fahrzeugs von der A-Säule bis zur C-Säule erstreckt. Das Schutzkissen 10 enthält aufblasbare Kammerbereiche 12 und nicht aufblasbare Flächenbereiche 14, 16, 18. Durch die nicht aufblasbaren Flächenbereiche 14, 16, 18 wird Füllgasvolumen an Fahrzeugstrukturbereichen eingespart, von denen keine besondere Verletzungsgefahr ausgeht. Ferner tragen die nicht aufblasbaren Flächenbereiche 14, 16, 18 zur dreidimensionalen Formgebung des Schutzkissens bei.

Das Schutzkissen 10 wird aus dem in Fig. 2 gezeigten Textilmaterialzuschnitt hergestellt, der zwei in bezug auf eine Faltlinie 20 weitgehend spiegelsymmetrisch ausgebildete Materiallappen 10a, 10b umfaßt. Aus dem in Fig. 2 gezeigten, einstückigen Textilmaterialzuschnitt werden durch Falten entlang der Faltlinie 20 zwei deckungsgleich aufeinandergelegte Lagen gebildet, die entlang dem der Faltlinie 20 gegenüberliegenden Rand durch eine Naht miteinander verbunden werden. Während der Materiallappen 10a durchgehend ausgebildet ist, hat der Materiallappen 10b Aussparungen 22, 24, 26, die in Form, Lage und Größe den nicht aufblasbaren Flächenbereichen 14, 16, 18 entsprechen. Jede dieser Aussparungen 22, 24, 26 wird zur Abgrenzung der aufblasbaren Kammerbereiche von einer durchgehenden Naht umgeben.

Fig. 3 zeigt vergrößert und schematisch eine Querschnittsansicht eines aufgeblasenen Schutzkissens mit zwei aufgeblasenen Kammerbereichen 30, 32 und einem dazwischenliegenden nicht aufblasbaren und einlagig ausgebildeten Flächenbereich 34. Aus Fig. 3 wird deutlich, daß die aufblasbaren Kammerbereiche 30, 32 zweilagig und die nicht aufblasbaren Flächenbereiche 34 einlagig ausgebildet sind.

Bei einer alternativen Ausführungsform ist das Schutzkissen aus zwei am Außenumfang deckungsgleichen Textilmaterialzuschnitten gebildet, von denen der eine dem Materiallappen 10a und der andere dem Materiallappen 10b in Fig. 2 entspricht.

## Patentansprüche

1. Aufblasbares Schutzkissen für den Insassenschutz in Fahrzeugen, insbesondere zur Abdeckung der seitlichen oberen Begrenzungsstrukturen des Fahrzeugs zwischen A-Säule und C-Säule, mit voneinander durch nicht aufblasbare Flächenbereiche abgegrenzten auf blasbaren Kammerbereichen, und hergestellt aus zwei aufeinandergelegten Lagen eines Textilmaterials, dadurch gekennzeichnet, daß die zwei Lagen Textilmaterial aus einem einteiligen, entlang einer Faltlinie gefalteten Zuschnitt gebildet sind und eine der aufeinandergelegten Lagen des Textilmaterials an den nicht auf blasbaren Flächenbereichen entsprechende Aussparungen aufweist.
